# EUROPEAN PATENT APPLICATION

(11) **EP 1 246 102 A1**
(43) Date of publication of application: **02.10.2002**
(21) Application number: 02006663.5
(22) Date of filing: 26.03.2002
(51) Int. Cl.: G06F 17/60

(54) **Hazardous materials information management system**

(30) Priority: 26.03.2001 US 817521
(71) Applicant: TRW INC., Redondo Beach, CA 90278 (US)
(72) Inventor: Schramke, Richard W., Ellicott City, MD 21042 (US); Packard, Steven J., Highlands Ranch, CO 80126 (US); Sparks, Witt T., Superior, CO 80027 (US); Zajonc, David P., Aurora, CO 80015 (US); Tyree, John, Lakewood, CO 80228 (US)
(74) Representative: Schmidt, Steffen J., Dipl.-Ing.

(57) **Abstract**

A method and system (10) for managing and assisting with shipment of hazardous materials from a source location to a destination location. Shipment data (72) containing information about the goods is obtained. Geographic positioning data about the location of the goods as they travel from the starting location to the distribution location is obtained. Geographic positioning data is used to select near real-time weather data (88) related to the location of the goods. The shipment is monitored to detect an emergency condition. A recommended response to potential and the detected emergency condition are calculated.

## Description

### BACKGROUND OF THE INVENTION

### 1. Field of the Invention

The present invention relates generally to a system for managing and tracking the transportation of high-risk/high-value hazardous material ("HAZMAT") shipments, and more particularly, to a method and system for supporting management, decision making and responding to emergencies associated with the transport of such shipments.

### 2. Discussion of the Related Art

Approximately one million commercial over-the-road shipments classified as hazardous materials are in transport throughout the country each day, with nearly 94% of these shipments carried by truck. Several non-commercial sources of hazardous materials also exist. The Department of Defense (DOD) moves nuclear, biological, and/or chemical weapons of mass destruction (NBC WMD). The Department of Energy (DOE) moves low-and high-level nuclear waste including spent nuclear fuel for destruction. The Environmental Protection Agency (EPA) moves materials from Superfund and other sites. Many shipments cross political and jurisdictional boundaries without the coordination or complete knowledge of local public safety officials. Complying with regulations is costly and complex, and during the course of transit, the exact geographic location of these shipments at any given time is not usually known. Additionally, shipments that are tracked have no shipment-specific hazards information integrated with the geographic location data. Finally, when an accident involving a shipment results in a release of the hazardous material, no real-time alert of authorities, or real-time response information or methods is available or provided to emergency response teams.

Consequently, a risk to local communities and their populations is present. Technologies exist to reduce the danger associated with hazardous material shipment. Geospatial data, for example, including, but not limited to, weather, terrain, roads, populations, school locations, police station locations, etc., is available. Geospatial data may be combined properly with other information and reduce the liability of shippers and carriers, as well as increase the efficiency and results of emergency responders, and thus improve public safety. A variety of useful databases are also available; however, these databases are often disparate.

Disadvantages of current systems are that no integrated, near real-time solution to the above needs is provided. Integrating the many planning, routing, monitoring, tracking and regulatory databases provides better emergency response capability, and supports successful reaction to and remediation of spills and other incidents involving high value, high risk or hazardous material shipments. A system which supports the route planning needs of the shipper and carrier/driver, and mitigates public safety risk by providing timely and well-informed information to emergency response personnel, by integrating materials data with near real-time weather and geographic location data related to the shipment is desired. Many technologies exist to support particular needs, but these diverse capabilities have not been wholly-integrated into a useful support structure for monitoring, tracking, and identifying these shipments in near real-time while the shipment is in progress.

A system which integrates accurate data about shipment location and contents, coupled with weather and geospatial data, jurisdictional boundaries, and emergency response information, in a web-based architecture, is additionally desired.

A system which automates and integrates communications, databases and database updates, and predictive decision support tools using a tracking and geographical information based display with existing transportation and geographic position information sources, applications, and databases to produce a HAZMAT tracking and management capability system that is scalable to handle the smallest jurisdiction's needs as well as support larger entities such as State and Federal agencies is needed.

### SUMMARY OF THE INVENTION

In accordance with the teachings of the present invention, a method and system for managing the shipment of goods is disclosed that includes a storage device for storing data related to the shipment, a processor for retrieving in real time and for updating at least one data set in the storage module, and an analysis module for analyzing the data and providing the results of the analysis to a user. In the exemplary embodiment, geographic positioning data is obtained about the location of the goods as they travel from the starting location to the destination location. The geographic positioning data is used to select, in near real time, weather data related to the location of the goods. In the event of a detected emergency condition a recommended response is calculated and transmitted to users of the system to enable them to take corrective action.

Additional objects, advantages and features of the present invention will become apparent to those skilled in the art from the following discussion and the accompanying drawings and claims.

### BRIEF DESCRIPTION OF THE DRAWINGS

Figure 1 is a block diagram illustrating a hazardous information management system of the present invention;

Figure 2 is a block diagram illustrating an exemplary architecture of the system of Figure 1;

Figure 3 is a block diagram illustrating an implementation of the system of Figure 1; and

Figure 4 is a flow diagram illustrating the system of Figure 1.

### DETAILED DESCRIPTION OF THE PREFERRED EMBODIMENTS

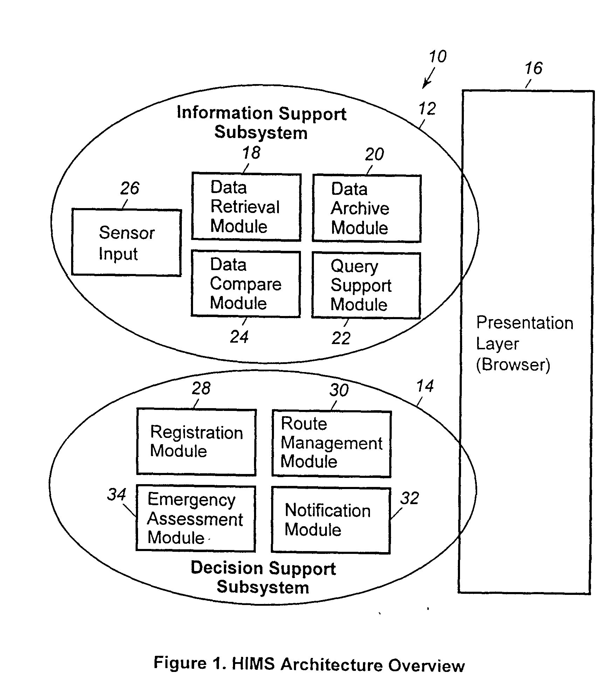

Referring to Figure 1, a hazardous materials information management system 10 (HIMS), according to an exemplary embodiment of the present invention, is shown that includes an information support system 12, and a decision support system 14. The information support system 12 and decision support system 14 rely on a presentation layer or browser 16 for interface with users. The presentation layer or browser 16 is available in a networked environment such as an internet. In the exemplary embodiment, the information support system 12 includes data retrieval module 18, data archive module 20, query support module 22, data compare module 24 and sensor input 26. However, it should be appreciated that other modules or devices which perform functions associated with the data including, but not limited to, retrieving, manipulating or storing data in information support system 12 may be used.

The modules and devices which are associated with information support system 12 autonomously performs functions based on conditions within the system 10. For example, if data is received from sensor input 26, then data archive module 20 may automatically store the sensor data. Alternatively, the modules and devices associated with information support system 12 may perform functions. For example, a user via a web browser 16 may input data into the system 10, thus the data archive module 20 stores the data upon its receipt to the system 10.

In the exemplary embodiment, decision support system 14 includes a registration module 28, route management module 30, notification module 32 and emergency assessment module 34. However, it should be appreciated that other modules or devices which maintain the data and logic to register users, monitor user access, plan optimized routes, assess emergency conditions, disseminate emergency information or any other functions related to emergency response decision and management may be used.

Shipment registration module 28 queries the user for information related to shipments, including, but not limited to, a security password, shipment data, or other data related to the shipment which may be useful during the transportation process. For example, a shipper or carrier executes a "registration," whereby critical information such as, but not limited to, shipment origin and destination, cargo contents (e.g., chemical composition) and weight/volume, etc., are entered into the system 10. The shipment information may then be stored in data archive module 20.

Route Management module 30 uses the shipment data and road data to assess routes or courses of travel for the shipment, and more importantly suggest an optimal route. The location of authorized routes, waterways, schools, and other geospatial data and shipment data is used for risk analysis in the "best" route model. In the exemplary embodiment, the "best" route model is an impedance type model which accounts for pertinent "resistance," for example, avoiding heavily populated areas, "nuclear free zones" or roads with long stretches along rivers, lakes, or streams, depending on the material dangers, related to specific shipments. The "best" route is determined and displayed on a map along with directions provided as text. The "best" route is based on static, dynamic and/or predicted human health safety, environmental protection, weather, traffic or other special concerns related to the population or environment. Additionally, reports which are based on information supplied when registering a shipment may be produced in a variety of compliance-related formats to assist in manifesting as well as regulatory conformance.

Emergency assessment module 34 determines the magnitude of the emergency conditions and the need for a response. Emergency assessment module 34 obtains stored data, such as the emergency response data, road data, shipment data and real-time data such as weather data and geographic positioning data related to the shipment. For example, once an emergency condition such as a spill of the shipment is identified, the emergency assessment module 34 may retrieve stored data from data archive module 20, or near real-time data from the sensor input 26 or any other sensing or monitoring devices from which data related to the emergency condition, incident/release modeling, emergency assessment, or response may be acquired.

Once there is a determination that an emergency condition such as a HAZMAT release has occurred, notification module 32 sends data related to the emergency condition so that various recipients may be notified and therefore receive the information necessary to respond. Notification module 32 provides a rapid and well-informed response by automatically sending information. In the exemplary embodiment, notification module 32 automatically contacts designated recipients in the event of the emergency condition, allowing immediate and broad-ranging notifications, for example, to local emergency response teams, to shippers and carriers, and even to the pagers carried by volunteer firefighters. Automatic notification may occur by phone, fax, pager, and even national emergency notifications systems like the National Oceanic and Atmospheric Administration's (NOAA) Weather Radio, which have the potential to reduce the incident-to-response time, as well as result in a more comprehensive response. Additionally, faxes may be sent to designated recipients, which include data about the location (via a map) and the released materials. Additionally, a web site may be provided via presentation layer 16 which displays a map of the incident with an overlaid plume as appropriate, spill content information, contact information, and other pertinent data. Integration of automated notification with accurate modeling of the spill with location and materials data (e.g., populations, weather, chemistry) aids response teams in pre-arrival preparation and improved onsite mitigation, and prevention of more extensive exposure.

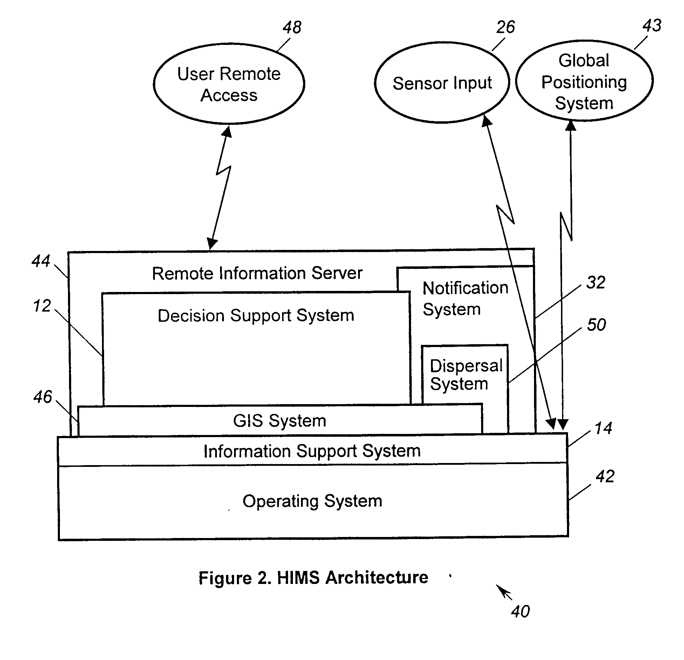

Referring to Figure 2, a system architecture 40, according to the invention, is illustrated. In the exemplary embodiment, the system architecture 40 includes an operating system 42 and a remote information server 44. An example of operating system 42 is Windows NT 4.0® manufactured by Microsoft Corporation. The remote information server 44 allows users remote access 48 to the information support system 14 and the decision support system 12. In the exemplary embodiment, information support system 12 uses a geospatial information system (GIS) 46 to obtain geospatial data and a sensor remotely located with the shipment to receive sensor input 26 indicative of the current location of the shipment or an emergency condition or "spill."

Information support system 14 may also use a global positioning system (GPS) 43. The GPS 43 transmits data related to the current geographic position for the shipment while in transit from the source location to the destination location. For example, the GPS of the United States Department of Defense provides accurate and precise location and time information continuously, to all points on the globe. The GPS is designed to receive and decode location and time information, real-time location knowledge to an accuracy within 100 meters. Alternatively, a differential GPS provides location and time information with an accuracy of a few meters. The information is relayed from the shipment-in-transit to the HIMS, integrated with other data and made available in a map-based display. Comparison to expected (planned) routing information allows route deviations, estimated time of arrival, and other travel information to be determined, and made appropriately available to subscribing users and agencies. Decision support system 12 determines the extent of a spill via dispersion system 50 of the shipment "spill" and transmits the "spill" occurrence to various users via notification module 32.

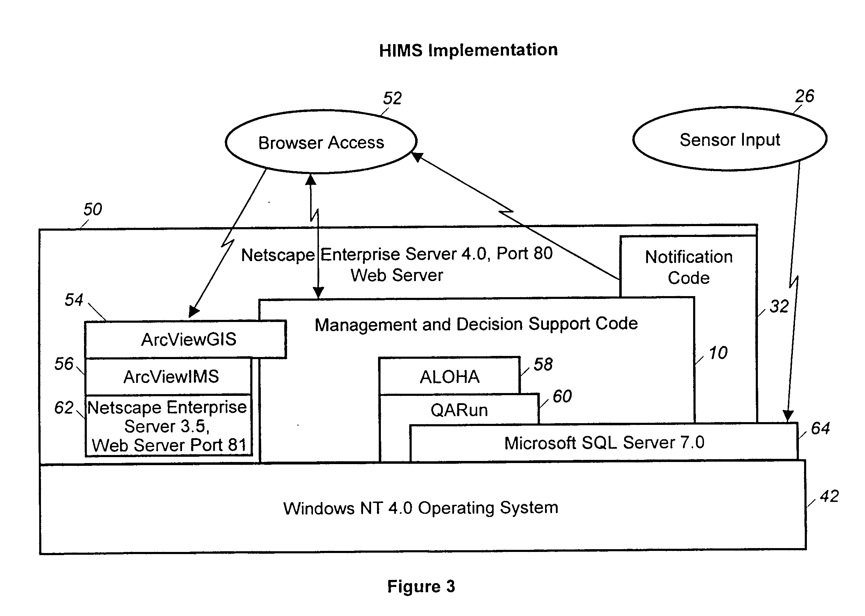

Referring to Figure 3, a web server 50 provides a user with browser access 52. One example of a suitable browser and server is Netscape® manufactured by Netscape Communication. Alternatively, any appropriate browser or server may be selected. The web browser receives information related to the information support system and decision support system such as data, maps or analysis generated by application such as, but not limited to, ArcView GIS 54, ArcView IMS 56, plume dispersion model, Areal Location Of Hazardous Atmospheres (ALOHA), 58 and QARun 60. A Microsoft® SQL Server 7 database 64 stores shipment data, responders, weather reporting sites, routes, and other data relevant to a spill. Additional servers or any appropriate server may be used depending on the application selected. For example, in the exemplary embodiment, Netscape Enterprise Server 3.5® 62 serves maps from ArcView IMS 56, and Netscape Enterprise Server 4.0® is required to execute servlet code.

A GIS System, such as ArcView GIS 54, is used to maintain a map and related data from both stored and near real-time inputs, and provides that data to the web browser 50, ArcViewlMS 56, and the decision support system 12.

Training can be supported by a GPS Simulator. One exemplary GPS simulator may be a standalone Java application which simulates a moving vehicle by inserting points into an (actual route) table in the database 64. The GPS simulator relies on the routes database in ArcView GIS 54.

A plume dispersion module 58 is used when an incident has occurred (or is simulated). ALOHA may be selected as a plume dispersion module 58. Alternatively, any appropriate plume dispersion model may be selected. The system locates the weather reporting station closest to the incident and retrieves the temperature, wind speed, etc., from that station. These values are used by plume dispersion model 58 to compute an expected plume. The expected plume is plotted on a map by ArcView IMS 56 and served to the client.

In the exemplary embodiment, plume dispersion module 58 does not have an API, thus, QARun 60 provides functions such as "pushing" buttons and filling in parameters necessary to generate a plume model. QARun 60 reads a file and populates the proper screens in plume dispersion model 58. Plume dispersion model 58 generates a plume file which is copied and renamed by the QARun script into the PlumeData directory. The plume file may then be read by ArcView IMS 56 and plotted on the map.

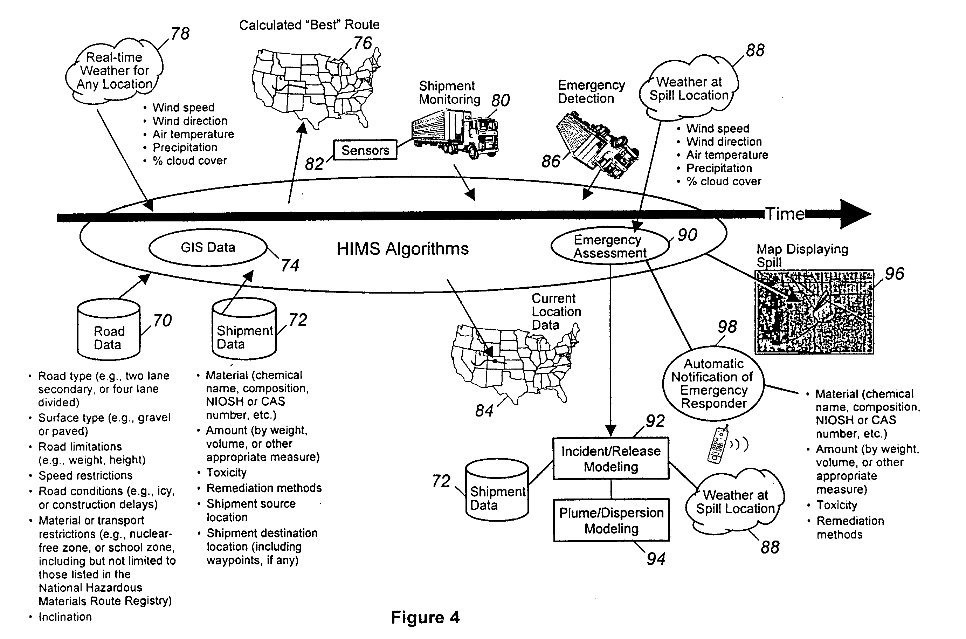

Referring to Figure 4, the system manages the shipment of materials by obtaining data such as road data 70, shipment data 72, GIS data 74 and other data that may be acquired prior to transport of the material. Road data 70 indicates the physical conditions of the roads and the restrictions related to the roads over which the shipment may travel. Shipment data 72 indicates the characteristics of the shipment such as, but not limited to, the material, amount, toxicity, remediation methods, shipment source location, shipment destination location. GIS data 74 includes, but is not limited to, weather, terrain, roads, populations, school locations and police station locations.

Determination of a "best" route for material transport 76 uses road data 70, shipment data 72, and GIS data 74 to determine an optimal route which the shipment will travel. The "best" route may be further adjusted based on dynamic conditions and predicted conditions for locations that the shipment may travel through in the future. For example, the determination of a "best" route may consider predicted weather conditions for an optimal route.

For the city planner or Emergency Response Agency, the "best" route is a contingency planning tool. Routes can be examined for their proximity to schools, or to determine the ease of access for emergency response, and allows knowledge of the location, contents, and progress of any registered shipment within the user's jurisdiction.

A shipper enters data about a particular shipment into the database 72, providing among other data, the shipment contents in terms of material, chemical composition, container type, weight and/or volume, shipment origin (source) shipment destination, driver certification and other information, and name, address, and phone of contact personnel. Once the shipment is dispatched from the source location, shipment monitoring 80 evaluates the integrity and location of the shipment. Sensors 82 are used to indicate whether an emergency condition such as, but not limited to, a spill, leak or explosion occurs.

By knowing a shipment's near real-time location, a correlation may be made to the nearest responsible emergency response provider. Furthermore, knowledge of the resources and facilities within a "sphere of influence" around each shipment allows the system 10 to identify both the proper authorities and the facilities at-risk (e.g., schools) when an incident occurs for a particular shipment. A "sphere of influence" may include mitigation resources, official restrictions, and potential predetermined risks.

Additionally, at the "spill" location, near real-time weather data 88 based on the geographic position of the shipment may be obtained. If emergency condition detection 86 determines a problem with the integrity of the shipment, then an emergency assessment 90 is initiated. In the exemplary embodiment, emergency assessment 90 includes incident/release modeling 92. Incident/release modeling 92 incorporates near real-time weather data 88 along with plume/dispersion modeling 94. The EPA, the National Oceanic and Atmospheric Administration (NOAA) and the Department of Defense support numerous efforts to model atmospheric dispersion of contaminants. Several plume/dispersion models, such as the Areal Location of Hazardous Atmospheres (ALOHA) and Hazard Prediction and Assessment Capability (HPAC) tools, calculate exposure levels and densities, and estimate the shape and dimension of plumes of chemicals or nuclear particulates. Plume/dispersion modeling 94 depends on information regarding wind speed and direction, atmospheric conditions, and temperature, which are more immediately available from the remotely retrieved near real-time weather data, rather than waiting until the response team arrives at the spill and only then obtaining the weather data.

The system 10 automatically integrates the near real-time weather data 88 for the geographic location of concern and the specific shipment data 72 (cargo contents, volumes, etc.) into plume/dispersion models 94 which provide modeling results. Plume/dispersion models 94 are preferably formed by obtaining the rudimentary maps, extracting the "map-able" layout data defining the calculated plume extent and dimension or plume propagation perimeter. The plume propagation perimeter may be integrated with the other pertinent data such as, but not limited to, geographic location data and geospatial data, thereby automating and estimating the conditions and extent of a spill or release. The conditions and spill or release information are made available as indicators to the emergency responder before arrival at the scene. In the exemplary embodiment, the emergency conditions may be displayed in a map 96 illustrating the spill, material information, amount, toxicity and remediation methods. It should be appreciated that any additional information that emergency response teams require may be included.

Once the map 96 and emergency information is determined, automatic notification 98 by phone, fax, pager, and even national emergency notifications systems like the National Oceanic and Atmospheric Administration's (NOAA) Weather Radio occurs. The automatic notification 96 facilitates the reduction of incident-to-response time, as well as a more comprehensive response.

The foregoing discussion describes merely exemplary embodiments of the present invention. One skilled in the art would readily recognize that various changes, modifications and variations can be made therein without departing from the spirit and scope of the invention as defined in the following claims.

## Claims

1. A system for managing the shipment of hazardous material goods, comprising:
a storage device for storing data related to the shipment;
a processor for retrieving in near real-time and updating at least one data set in the storage module, wherein the data is selected from the group of shipment data, geographic positioning data, weather data, emergency conditions data, emergency response data, geospatial data and combinations thereof and
an analysis module for analyzing the data and providing the results of the analysis to a user, wherein the analysis module provides information selected from the group consisting of an optimal shipment route, an emergency condition determination, an emergency response, and as applicable, a projected plume dispersion

2. The system of Claim 1 wherein the projected plume dispersion is related to the emergency condition determination, the dispersion being calculated based on shipment data, geographic positioning data, geospatial data and near real-time weather data specific to the emergency condition and physical location.

3. The system of claim 1.wherein the analysis module identifies a proposed route calculated based on risk analysis that consists of an impedance type model which summarizes "resistance" of a route and which selects the lowest "resistance" path.

4. The system of Claim 3 wherein data on the route and along all possible alternative routes includes population density and distribution, political boundaries, environmental boundaries, surface inclination and topology, road surface type, road dimensions, road height and weight limitations, road authorizations for cargo types, and road segment distances.

5. The system of Claim 1 further comprising:
a network for relaying shipment data, geographical positioning data and near real-time weather data;
and an emergency assessment module for projecting potential emergency conditions as a function of the data;
wherein information about the projected emergency conditions is transmitted over the network and is available for access at remote locations.

6. The system of Claim 1 further comprising:
a notification module for automatically transmitting the results of the analysis to remote locations via a network.

7. A method for managing a shipment of hazardous material goods, comprising:
obtaining shipment data containing information about the goods;
determining optimal and alternate routes for transport of the goods;
obtaining geographic positioning data about the location of the goods as they travel from a starting location to a distribution location;
using the geographic positioning data to select weather data related to the location of the goods;
monitoring the shipment with regard to transport progress and to detect an emergency condition;
calculating a recommended response to a detected emergency condition; and
automatically notifying database-defined emergency response authorities.

8. The method of Claim 7 wherein the recommended response is a function of the selected weather data, the hazards associated with the goods, the location of the goods and the terrain of the geographic location of the goods.

9. The method of Claim 7 wherein determining optimal and alternate routes includes determining a proposed route calculated based on risk analysis that consists of an impedance type model which summarizes "resistance" of a route and which selects the lowest "resistance" path.

10. The method of Claim 9 wherein data on a route and along all possible alternative routes includes population density and distribution, political boundaries, environmental boundaries, surface inclination and topology, road surface type, road dimensions, road height and weight limitations, road authorizations for cargo types, and road segment distances.

11. The method of Claim 7, further including determining a projected plume dispersion related to an emergency condition,
wherein the dispersion is calculated based on shipment data, geographic positioning, geospatial data and weather data, and
wherein the recommended response is based on the projected plume dispersion.

12. The method of Claim 7 further including transmitting information about the presence of the emergency condition to selected users, and
wherein the information is transmitted over a network.
